# EUROPÄISCHE PATENTSCHRIFT

(11) **EP 1 002 393 B1**
(45) Veröffentlichungstag und Bekanntmachung des Hinweises auf die Patenterteilung: **21.09.2005**
(21) Anmeldenummer: 98951161.3
(22) Anmeldetag: 20.07.1998
(51) Int. Cl.: H04L 9/32, G07F 7/10

(54) **EINRICHTUNG ZUM SICHEREN ERSTELLEN VON ELEKTRONISCHEN UNTERSCHRIFTEN**
SYSTEM FOR GENERATING ELECTRONIC SIGNATURES IN ABSOLUTE SECURITY
SYSTEME POUR LA CREATION DE SIGNATURES ELECTRONIQUES EN TOUTE SECURITE

(30) Priorität: 06.08.1997 DE 19734029
(43) Veröffentlichungstag der Anmeldung: 24.05.2000
(73) Patentinhaber: Infineon Technologies AG, 81669 München (DE); SIEMENS AKTIENGESELLSCHAFT, 80333 München (DE)
(72) Erfinder: SEDLAK, Holger, D-85658 Egmating (DE)
(74) Vertreter: Epping - Hermann - Fischer
(86) Internationale Anmeldenummer: PCT/DE1998/002034
(87) Internationale Veröffentlichungsnummer: WO 1999/008415

(56) Entgegenhaltungen:
- WO-A-97/12460

## Beschreibung

Neben der heute üblichen handschriftlichen Unterschrift soll insbesondere bei Dokumenten aber auch bei beliebigen Datensätzen eine elektronische Unterschrift möglich und rechtlich anerkannt werden. Elektronische Unterschrift bedeutet dabei, daß ein Hash-Wert der zu unterschreibenden Daten verschlüsselt wird und diese verschlüsselte Form zusammen mit den Originaldaten an den Empfänger übermittelt wird. Ein Hash-Wert ist eine durch eine Einwegfunktion verschlüsselte bzw. transformierte Form der Originaldaten. Da der Empfänger weiß, von wem die Daten stammen, kann er mit einem dem Sender zugeordneten Schlüssel, der ihm bekannt ist, die verschlüsselten Daten wieder entschlüsseln und selbst die empfangenen Originaldaten mittels der ihm ebenfalls bekannten Hash-Funktion transformieren und aus der Übereinstimmung der transformierten Originaldaten mit den entschlüsselten Daten die Korrektheit der Unterschrift ableiten und auf diese Weise die empfangenen Daten eindeutig dem genannten Empfänger zuordnen.

Ein solches Verfahren ist aus der WO 97/12460 bekannt.

Damit die Unterschrift in hohem Maße fälschungssicher ist, müssen komplexe Algorithmen zur Verschlüsselung verwendet werden. Dies bedeutet jedoch einerseits, daß die zu verschlüsselnden Daten in einem möglichst kompakten Format vorliegen müssen, um die Verschlüsselungszeit so kurz wie möglich zu halten.

Andererseits werden jedoch bei der Erstellung der Originaldaten Programme wie beispielsweise die von der Firma Microsoft Corporation, Redmont, Ca., USA unter den Marken "Word" oder "Excel" vertriebenen Softwareanwendungen verwendet, um eine möglichst übersichtliche und benutzerfreundliche Darstellung zu erhalten. Solche Originaldatendateien enthalten dann allerdings eine Fülle von Steuerzeichen, die oft mehr Platz in Anspruch nehmen als die eigentlichen "Nutzdaten".

Einrichtungen oder Systeme zum Erzeugen elektronischer Unterschriften, das heißt also allgemein zum Verschlüsseln von Daten, weisen meist einen PC auf, der üblicherweise mit Peripheriegeräten wie einem Bildschirm, einer Tastatur und einem Drucker versehen ist.

Die Verschlüsselung der Daten erfolgt vorteilhafterweise mit Hilfe von Chipkarten, in denen der Verschlüsselungsalgorithmus beziehungsweise die Verschlüsselungsalgorithmen sowie der oder die dem Benutzer zugeordneten geheimen Schlüssel abgespeichert sind. Dadurch kann jeder Benutzer seinen Schlüssel und den oder die Algorithmen leicht mit sich tragen, um beliebige PCs oder auch andere Medien, wie Fax- oder Telexgeräte benutzen zu können. Es ist also zusätzlich ein Chipkartenlesegerät nötig, das jedoch bei heutigen Systemen unter der Kontrolle des Betriebssystems des PC oder eines anderen Datenerstellungs- und/oder Übertragungsmediums steht.

Da die zu verschlüsselnden Daten in einem möglichst kompakten Format vorliegen müssen, werden sie also im Regelfall zum Zeitpunkt der Verschlüsselung in einem anderen Format vorliegen als das am Bildschirm dargestellte Format. Dies bedeutet jedoch, daß der Benutzer nie sicher sein kann, ob die zu verschlüsselnden Daten auch wirklich den Daten entsprechen, die aktuell am Bildschirm angezeigt werden. Dies um so mehr, als elektronische Unterschriften sinnvollerweise an vernetzten PCs verwendet werden, um die auf diese Weise unterschriebenen Dokumente direkt vom PC über das Netz zum Empfänger senden zu können. Dies eröffnet jedoch die Möglichkeit, daß über das Netz Dateien in den PC eingespielt werden, die eine Manipulation der zu verschlüsselnden Daten ermöglichen.

Auf diese Weise ist es möglich, daß zwar am Bildschirm ein Lieferauftrag für eine Firma X angezeigt wird, jedoch gesteuert von dem Benutzer nicht bekannten Dateien in seinem PC, die ihm über das Netz zugespielt worden sind, ein Lieferauftrag für die Firma Y in das Chipkartenlesegerät übermittelt wird, und dort mit der elektronischen Unterschrift versehen wird, um anschließend an die Firma Y geschickt zu werden.

Diese Mißbrauchsmöglichkeit wäre höchstwahrscheinlich leicht zu entdecken, so daß für den Auftraggeber kein wirklicher Schaden entstehen würde, jedoch wäre dadurch eine elektronische Unterschrift im juristischen Sinne nichts wert und würde nicht allgemein anerkannt werden.

Die Aufgabe vorliegender Erfindung ist es daher, eine Einrichtung anzugeben, bei der sichergestellt werden kann, daß die zu unterschreibenden Daten auch wirklich den vom Benutzer vorgesehen Daten entsprechen.

Die Aufgabe wird durch eine Einrichtung mit den Merkmalen des Anspruchs 1 gelöst.

Bei den meisten PC-Systemen ist es möglich, unterschiedlichste Peripheriegeräte von allen möglichen Herstellern anzuschließen. Damit der PC mit diesen Peripheriegeräten kommunizieren kann, ist es nötig, im Betriebssystem sogenannte Treiber, beispielsweise Bildschirmtreiber oder Druckertreiber zu installieren. Diese Treiber sind Programme, die aus einem Standardformat ein Datenformat erstellen, das vom entsprechenden Bildschirm oder Drucker gelesen werden kann. Es ist daher üblich, in einem PC die Möglichkeit vorzusehen, aus dem PC-eigenen Format ein solches Standardformat zu erstellen. Hierzu werden ebenfalls Programme verwendet, die als Frontendtreiber bezeichnet werden, während die Peripheriegerätetreiber als Backendtreiber bezeichnet werden.

Es gibt heutzutage noch kein einheitliches Standardformat; in etwa der Hälfte aller am Markt befindlichen PCs ist jedoch das sogenannte Post-Script-Format verfügbar. Die meisten Peripheriegeräte können auch direkt mit diesem Post-Script-Format angesteuert werden.

Die Erfindung sieht nun vor, in eine Leitung zwischen dem PC und einem anzeigenden Peripheriegerät oder parallel zu dem Peripheriegerät eine zertifizierte Datenträger-Lese/ Schreibeinrichtung vorzusehen, in die einerseits die zu unterschreibenden Daten eingelesen werden und andererseits diese Daten auf dem anzeigenden Peripheriegerät, beispielsweise einem Drucker oder einem Bildschirm, zur Überprüfung der Korrektheit dargestellt werden können. Das Erstellen der elektronischen Unterschrift beziehungsweise das Zurücksenden der unterschriebenen Daten an den PC erfolgt erst nach einer aktiven Bestätigung durch den Benutzer. Es ist hierbei sichergestellt, daß dieser Bestätigungsvorgang nicht durch den PC gesteuert erfolgen kann.

Der Vorteil dieser Einrichtung ist, daß der Benutzer am anzeigenden Peripheriegerät überprüfen kann, welche Daten in die Chipkarte zum Unterschreiben eingelesen wurden. Die Darstellung ist zwar nicht so komfortabel wie bei bekannten marktüblichen Textverarbeitungsprogrammen, jedoch ist sichergestellt, daß es dasselbe Format ist, wie bei den Daten, die in die Chipkarte eingelesen wurden, und auf diese Weise keine Manipulation durch ein weiteres im PC möglicherweise enthaltenes Programm vorgenommen werden konnte. Da die Datenträger-Lese/Schreibeinrichtung völlig autark ist, und nicht vom PC angesteuert werden kann, sondern lediglich Daten von dort erhält, ist ein Mißbrauch ausgeschlossen. Voraussetzung dafür ist allerdings, daß diese Datenträger-Lese/Schreibeinrichtung "zertifiziert" ist, das heißt von einer autorisierten Behörde überprüft und beispielsweise verplombt sein muß.

Die Datenträger-Lese/Schreibeinrichtung weist in vorteilhafter Weise einen Knopf oder ein anderes Betätigungselement auf, den der Unterzeichner drücken muß, bevor das Erstellen und/oder Absenden des unterschriebenen Dokuments oder Schriftstücks erfolgt. Es bleibt dabei dem Unterzeichner - wie bei der bisherigen Unterschrift auch - überlassen, ob er die Korrektheit des Schriftstücks überprüfen möchte oder ob er beispielsweise durch Knopfdruck einfach nur unterschreibt. Jedenfalls bedeutet das Betätigen des Betätigungselements eine eindeutige Willensäußerung.

Die Erfindung wird nachfolgend anhand eines Ausführungsbeispiels mit Hilfe einer Figur näher erläutert.

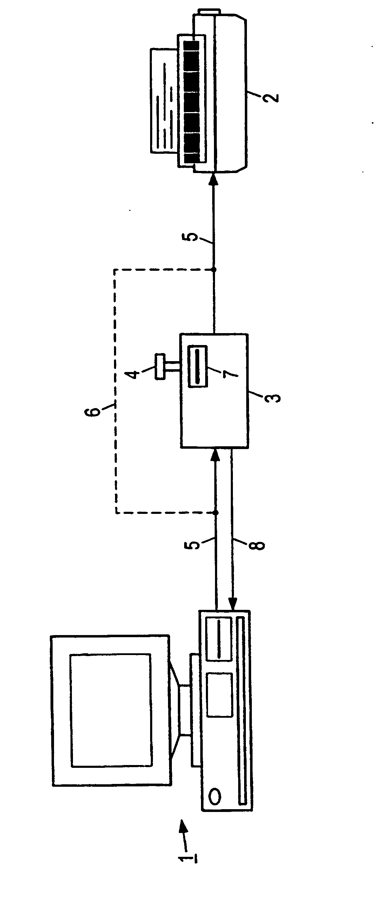

Die Figur zeigt dabei eine vereinfachte Prinzipdarstellung der Erfindung.

Die Figur zeigt als Datenerstellungseinrichtung 1 einen Personal Computer. Im Rahmen der Erfindung sind jedoch ebenso andere Datenerstellungseinrichtungen, beispielsweise ein Faxgerät oder ein Telexgerät denkbar. Ein Faxgerät ist hier ebenfalls als Datenerstellungseinrichtung bezeichnet, da Daten in geschriebener Form in eine elektronische Form überführt werden. Die Datenerstellungseinrichtung 1 ist über Leitungen 5 mit einer peripheren Anzeigeeinrichtung 2, die im dargestellten Beispiel ein Drucker ist, verbunden. Dazwischen ist eine Datenträger-Lese/Schreibeinrichtung 3 geschaltet. Sie kann jedoch auch, wie durch eine strichlierte Leitung 6 angedeutet ist, parallel zur Anzeigeeinrichtung 2 geschaltet werden. Es ist außerdem denkbar, daß die Anzeigeeinrichtung 2 Bestandteil der Datenträger-Lese/Schreibeinrichtung 3 ist.

Die Datenträger-Lese/Schreibeinrichtung 3 weist einen Eingabeschlitz 7 auf, in den eine (nicht dargestellte) Chipkarte einführbar ist. Diese Chipkarte beeinhaltet den Algorithmus und den geheimen Schlüssel, mittels denen Daten, die von der Datenerstellungseinrichtung 1 über die Leitung 5 zur Datenträger-Lese/Schreibeinrichtung 3 übertragen werden, verschlüsselt, das heißt zu einer elektronischen Unterschrift verarbeitet werden.

Die die elektronische Unterschrift darstellenden verschlüsselten Daten werden über eine Leitung 8 zurück zur Datenerstellungseinrichtung 1 übertragen. Die Leitungen 5 und 8 können natürlich auch als bidirektionale Leitung ausgebildet sein.

Der wesentliche Bestandteil der Erfindung ist ein Betätigungselement 4, das im dargestellten Beispiel ein vom Benutzer zu drückender Knopf ausgebildet ist. Eine Erstellung und/oder Übertragung von der Datenträger-Lese/Schreibeinrichtung 3 zur Datenerstellungseinrichtung 1 der elektronischen Unterschrift erfolgt erst, nachdem der Benutzer diesen Knopf 4 gedrückt hat.

Da durch die erfindungsgemäße Einrichtung sichergestellt ist, daß die in der in die Datenträger-Lese/Schreibeinrichtung 3 eingeführten Chipkarte zu verschlüsselnden Daten identisch sind mit denen durch die Anzeigeeinrichtung 2 dargestellten Daten, ist die Unterschrift eindeutig und wird durch Betätigen des Knopfes 4, was auch im juristischen Sinn eine eindeutige Willensäußerung darstellt, getätigt. Voraussetzung für eine allgemeine Anerkennung einer solchen elektronischen Unterschrift wird allerdings sein, daß die Datenträger-Lese/Schreibeinrichtung 3 durch eine autorisierte Behörde "zertifiziert" ist, das heißt als einwandfrei geprüft und verplombt ist.

## Patentansprüche

1. Einrichtung zum sicheren Erstellen von elektronischen Unterschriften mit
- einer Datenerstellungseinrichtung (1),
- einer an diese angeschlossen Anzeigeeinrichtung (2), und
- einer Datenträger-Lese/Schreibeinrichtung (3) zur Aufnahme eines tragbaren Datenträgers, in dem der zur Erstellung der elektronischen Unterschrift nötige Algorithmus sowie ein benutzerspezifischer Schlüssel gespeichert sind,
- wobei die Datenträger-Lese/Schreibeinrichtung (3) zwischen die Datenerstellungseinrichtung (1) und die Anzeigeeinrichtung (2) oder parallel zur Anzeigeeinrichtung (2) geschaltet ist, so daß Daten, die von der Datenerstellungseinrichtung (1) in die Datenträger-Lese/Schreibeinrichtung (3) übertragen werden, durch die Anzeigeeinrichtung (2) dargestellt werden,
**dadurch gekennzeichnet,**
- **daß** die Datenträger-Lese/Schreibeinrichtung (3) von einer autorisierten Behörde zertifiziert ist,
- **daß** die Datenträger-Lese/Schreibeinrichtung (3) ein Betätigungselement (4) aufweist,
- **daß** das Betätigungselement mit der Datenträger-Lese/Schreibeinrichtung (3) und einem sich darin befindenden tragbaren Datenträger derart in Wirkverbindung steht, daß Daten, die zum Erzeugen einer elektronischen Unterschrift in dem tragbaren Datenträger von der Datenerstellungseinrichtung (1) zur Datenträger-Lese/Schreibeinrichtung (3) übertragen werden, in verschlüsselter, die elektronische Unterschrift bildender Form nur erstellt und/oder ausgegeben werden, wenn das Betätigungselement (4) vom Benutzer betätigt wurde.

## Claims

1. Device for reliably generating electronic signatures, having
- a data generating device (1),
- a display device (2) connected to the latter, and
- a data medium read/write device (3) for accepting a portable data medium which stores a user-specific key and the algorithm needed to generate the electronic signature,
- the data medium read/write device (3) being connected between the data generating device (1) and the display device (2) or in parallel with the display device (2), so that data transmitted from the data generating device (1) to the data medium read/write device (3) is shown by the display device (2),
**characterized**
- **in that** the data medium read/write device (3) is certified by an approved authority,
- **in that** the data medium read/write device (3) has an actuating element (4),
- **in that** the actuating element is actively connected to the data medium read/write device (3) and to a portable data medium situated in the latter in such a way that data which is transmitted from the data generating device (1) to the data medium read/write device (3) in order to produce an electronic signature in the portable data medium is generated and/or output in encrypted form, forming the electronic signature, only if the actuating element (4) has been actuated by the user.

## Revendications

1. Dispositif de création de signatures électroniques en toute sécurité comprenant,
- un dispositif (1) de création de données,
- un dispositif (2) d'affichage qui lui est raccordé, et
- un dispositif (3) de lecture/écriture de support de données de réception d'un support de données portatif, dans lequel sont mémorisés l'algorithme nécessaire à la création de la signature électronique ainsi qu'une clé spécifique à l'utilisateur,
- dans lequel le dispositif (3) de lecture/écriture de support de données est monté entre le dispositif (1) de création de données et le dispositif (2) d'affichage ou en parallèle au dispositif (2) d'affichage de sorte que des données, qui sont transmises par le dispositif (1) de création de données au dispositif (3) de lecture/écriture de support de données, sont représentées par le dispositif (2) d'affichage,
**caractérisé**
- **en ce que** le dispositif (3) de lecture/écriture de support de données est certifié par une autorité autorisée,
- **en ce que** le dispositif (3) de lecture/écriture de support de données comporte un élément (4) d'actionnement,
- **en ce que** l'élément d'actionnement coopère avec le dispositif (3) de lecture/écriture de support de données et un support de données portatif qui s'y trouve de sorte que des données, qui sont transmises pour la production d'une signature électronique dans le support de données portatif du dispositif (1) de création de données au dispositif (3) de lecture/écriture de support de données, ne sont créées ou émises sous forme chiffrée formant la signature électronique, que si l'élément (4) d'actionnement à été actionné par l'utilisateur.
